# EUROPEAN PATENT SPECIFICATION

(11) **EP 1 137 356 B1**
(45) Date of publication and mention of the grant of the patent: **17.03.2004**
(21) Application number: 99958391.7
(22) Date of filing: 06.12.1999
(51) Int. Cl.: A47J 27/21

(54) **IMPROVEMENTS RELATING TO ELECTRICALLY HEATED VESSELS**
HEIZEINRICHTUNG AN DEN BODEN EINES ELEKTRISCHEN HAUSHALTSGERÄTS
AMELIORATIONS DE RECIPIENTS CHAUFFES PAR UN SYSTEME ELECTRIQUE

(30) Priority: 08.12.1998 GB 9826969
(43) Date of publication of application: 04.10.2001
(73) Proprietor: OTTER CONTROLS LIMITED, Buxton, Derbyshire SK17 6LA (GB)
(72) Inventor: O'NEILL, Robert Andrew, "Morcot", Derbyshire SK17 9NQ (GB); LINDSTROM, John Jeffrey, Derbyshire SK17 9AW (GB); HOWARTH, John Anthony, Derbyshire SK17 6HS (GB)
(74) Representative: Milhench, Howard Leslie
(86) International application number: PCT/GB1999/004089
(87) International publication number: WO 2000/033709

(56) References cited:
- WO-A1-99/55209
- WO-A1-99/63789
- GB-A- 2 319 154
- US-A- 5 908 570
- US-A- 5 914 063

## Description

### Field of the Invention:

This invention concerns improvements relating to electrically heated vessels, particularly electrically powered water heating vessels such as kettles, hot water jugs, pots, pans, urns, laboratory equipment and the like.

### Background of the Invention:

Our British Patent Application No. 9821862.1 (published as GB2330064) concerns the assembly of planar electric heating elements into the bodies of electrically heated vessels, particularly plastics material vessel bodies which exhibit substantial dimensional changes as the temperature of water within the vessel is brought from cold to boiling. Planar heating elements are commonly of two different types, namely the underfloor heating element which comprises a metal plate having a sheathed heating element clamped or clenched to the underside thereof and the thick film heating element which comprises a resistance heating track or layer formed on the underside of an electrically insulating substrate. A sheathed heating element comprises an electrical resistance wire mounted with mineral insulation within a tubular metal sheath. The substrates used for thick film heating elements commonly comprise a stainless steel plate which is coated with glass or other electrically insulating material, the resistance heating track or layer being formed on the surface of the glass and then a further, protective, electrically insulating layer being formed over the resistance heating track or layer.

Described in our British Patent Publication No. 2330064 abovementioned are proposals for the attachment of planar heating elements of both types abovementioned in water heating vessels by provision of abutments within the vessel body against which the heating element is urged and retained by means of a circlip arrangement interacting with formations provided in the wall of the moulded plastics vessel body, the spacing between the periphery of the heating element and the internal surface of the vessel wall being closed by means of a resilient seal formed of an elastomeric and advantageously thermally-insulating material. A preferred form of seal comprises a ring shaped to locate positively around the periphery of the heating element and having a plurality of outwardly-extending, vertically spaced-apart fins which are deformed by contact with the vessel wall as the heating element and seal are assembled into the vessel.

European Patent Application No. 0807394 discloses a similar arrangement where a plastics water heating vessel body is provided with a planar heating element that fits inside the rim of the vessel body. A seal is provided which functions to seal a gap between the outside of an upstanding part of the element and the inside of the rim.

As mentioned above, the invention of our British Patent Publication No. 2330064 is primarily directed to the problems of assembling planar heating elements into plastics bodied vessels. The present invention, on the other hand, is concerned with the different problems that arise when the vessel body is formed of glass. Glass vessels are generally blown and formed into a mould and this controls the outer dimensions fairly accurately. However, the internal dimensions, in addition to whatever tolerances affect the external dimensions, exhibit dimensional variations due to variations in the thickness of the glass. Further inaccuracy is introduced when the vessel is annealed for stress relief after it is initially formed. As a result, the outer diameter of a mass-produced glass-bodied vessel may exhibit a dimensional tolerance of +/-2mm and the internal diameter may be somewhat worse. On account of these levels of tolerance variation, the sealing of a heating element into a glass-bodied vessel by a technique as taught in our British Patent Publication No. 2330064 may not be satisfactory.

### Object and Summary of the Invention:

The principal object of the present invention is to overcome or substantially reduce the abovementioned problem of assembling planar heating elements into glass-bodied vessels.

The present invention resides in the concept of utilizing a seal arrangement which is similar in principle to the arrangement disclosed in our British Patent Publication No. 2330064, but differs therefrom in that the arrangement is modified so that the seal acts between the periphery of the heating element and the external surface of the glass vessel, rather than the internal surface as in the arrangement taught in British Patent Application No. 2330064.

In accordance with the present invention there is provided an electrically heated vessel, particularly though not exclusively a glass bodied vessel, having the features set out in Claim 1.

The planar heating element itself may have an upturned flange constituting the said part formed to extend around the outside of the rim of the vessel opening. Alternatively, and as in some of the embodiments described in British Patent Publication No. 2330064 (the embodiment of Figure 4 for example), the heating element proper may be arranged to sit within a mounting flange which is provided with a part formed to extend around the outside of the rim of the vessel opening as aforesaid.

The seal can comprise an annular member having an external surface adapted to coact with the inner surface of said heating element part and an internal plurality of vertically-spaced inwardly-directed fins adapted to contact the external surface of the said rim. As such, the seal is the inverse of the preferred seal configuration described in British Patent Application No. 2330064 aforementioned. The seal may be shaped to positively locate with the upstanding part of the heating element.

In order to retain the heating element in place, it is proposed in accordance with an exemplary embodiment to provide the vessel with a base securely affixed to the glass bodied vessel and bearing upon the heating element so as to keep it in place. The base can conveniently form part of a handle moulding for the vessel, for example, the glass body of the vessel being captured within the base and handle moulding for example by virtue of the handle moulding providing a top mounting for a lid for the vessel and/or by virtue of the vessel body including an integrally formed pouring spout which serves additionally as an anchorage for the base.

The above and further features of the present invention are set forth in the appended claims and, together with advantages thereof, will be made clear in the following detailed description given with reference to the accompanying drawings.

### Description of the Drawings:

Figures 1A, 1B, 1C and 1D are, respectively, top plan, side elevation, cross-sectional and enlarged fragmentary cross-section views of a sealing ring which is utilized in the practice of the present invention as hereinafter described;
Figure 2 is an exploded perspective view showing an exemplary embodiment of glass-bodied water heating vessel according to the present invention;
Figure 3 is a cross-sectional side elevation view of the embodiment of Figure 2, showing in addition an exemplary handle moulding and base-to-spout attachment;
Figure 4 is a perspective view of the vessel shown in Figure 3;
Figure 5 is a side-elevation view showing an alternative to the base-to-spout attachment of Figure 3; and
Figure 6 is a cross-sectional view similar to Figure 3, but without the base-to-spout attachment and including a modification of the heating element and of the glass-bodied vessel for effecting positive engagement therebetween.

### Detailed Description of the Embodiments:

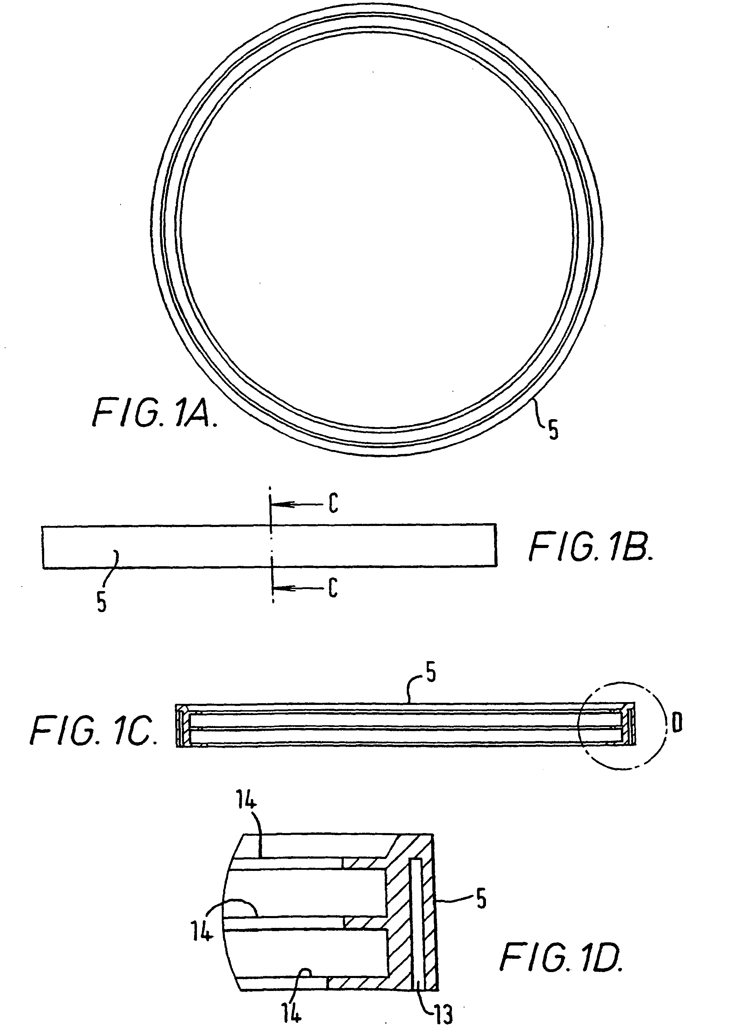

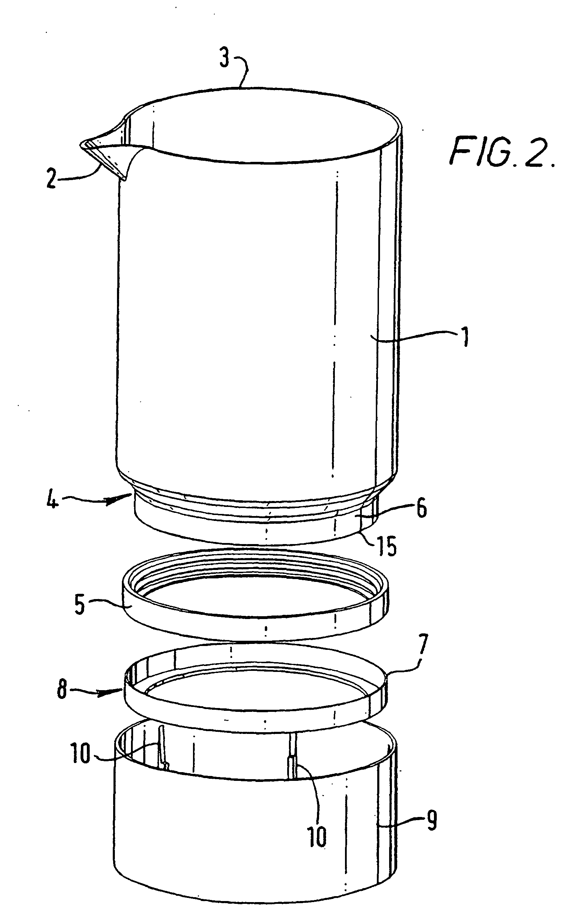

Referring first to the exploded view of Figure 2, shown therein is an open ended blow-moulded, glass vessel body 1 of generally cylindrical form provided with an integral pouring spout 2 at its upper rim 3 and, at its other (bottom) end, with a necked-in portion 4 of reduced diameter. An O-ring elastomer seal 5, which is shown in more detail in the several views of Figure 1 and will be described more fully hereinafter, is adapted to sealingly engage the external surface 6 of the reduced-diameter portion 4 of the vessel body 1. The seal 5 is also adapted to make positive engagement with an upturned flange part 7 of a schematically-shown planar heating element 8 and to seal the gap between the internal surface of flange part 7 and the external surface 6 of the necked-in vessel body portion 4 when, as hereinafter described, the heating element 8 is fitted to the bottom of the vessel body 1. Finally, there is also shown in Figure 2 a base 9 provided with internal ribs 10 which, in the assembled vessel, serve to keep the heating element 8 in place.

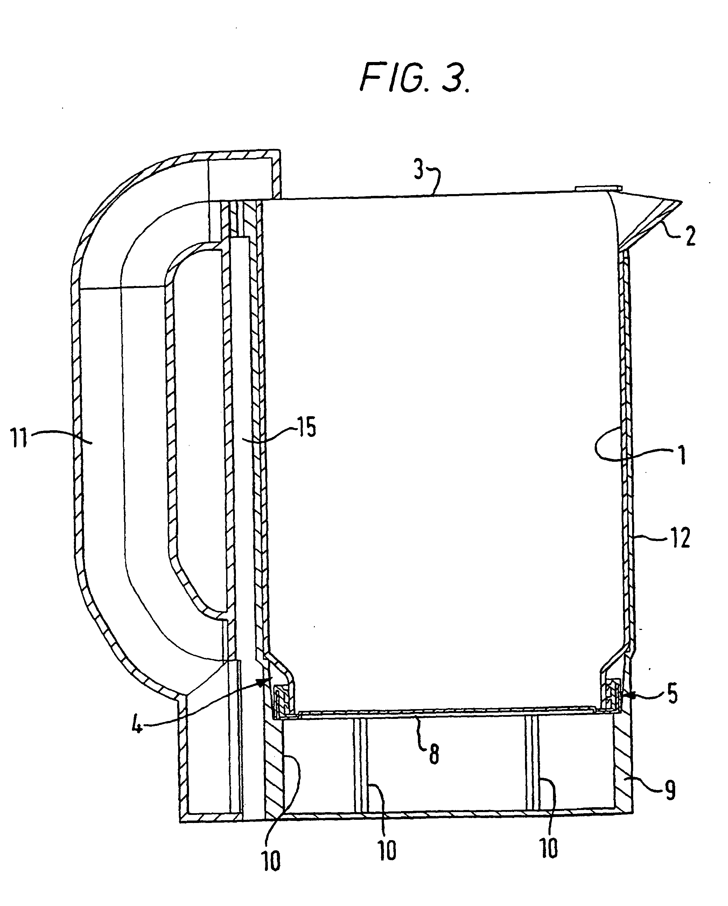

Figure 3 is a cross-sectional view of a vessel assembly substantially as shown in Figure 1 save for the showing additionally of a handle moulding 11 and a base-to-spout attachment moulding 12. Referring to Figure 3 and also to the several views of Figure 1 showing the detailed form of the seal 5, it can be seen that the seal 5 has a slot formation 13 which is adapted to receive the upturned flange part 7 of the heating element 8 so as positively to engage the seal 5 with the flange part 7. With the seal 5 thus positively engaged with the upturned flange part 7 of the heating element 8, the heating element 8 can be pushed onto the reduced diameter part 4 of the vessel body 1. The seal 5 has three internal horizontal fins 14 which are vertically spaced apart from each other (see Figure ID), the lowermost fin being longer than the other two. As shown in Figure 3, the bottom rim 15 of the reduced diameter part 4 of the vessel body 1 seats down upon the longest fin 14 when the heating element 8 is pushed into place on the bottom of the vessel body 1, and the other two fins 14 are deformed downwardly by engagement with the surface 6 at the bottom of the vessel body 1. The seal 5 thus renders watertight the gap that otherwise would exist between the internal surface of the heating element flange part 7 and the external surface 6 at the bottom of the vessel body.

The base 9 is formed of moulded plastics material and the internal ribs 10 are shaped and dimensioned as shown to provide support for the underside of the planar heating element 8 around the periphery thereof. The handle moulding 11, which may be formed integrally with the base moulding 9 or may be attached thereto by means of screws or clips for example, is arranged as shown to hook over the top rim 3 of the vessel 1 so as to secure the handle 11 to the vessel and at the same time maintain the glass body 1 of the vessel securely in place. There may be a separate moulding to secure the top of the handle to the rim of the vessel and take up assembly tolerances, but this is not shown. The handle, as shown, incorporates a steam duct 15 for directing steam from within the top of the vessel to a thermally-responsive control (not shown) provided for automatically switching off the heating element when water boils in the vessel. Also not shown is a lid for the vessel, which may be pivoted from the top of the handle moulding or from the separate securing moulding or may be fixed if the vessel is to be filled via the spout 2.

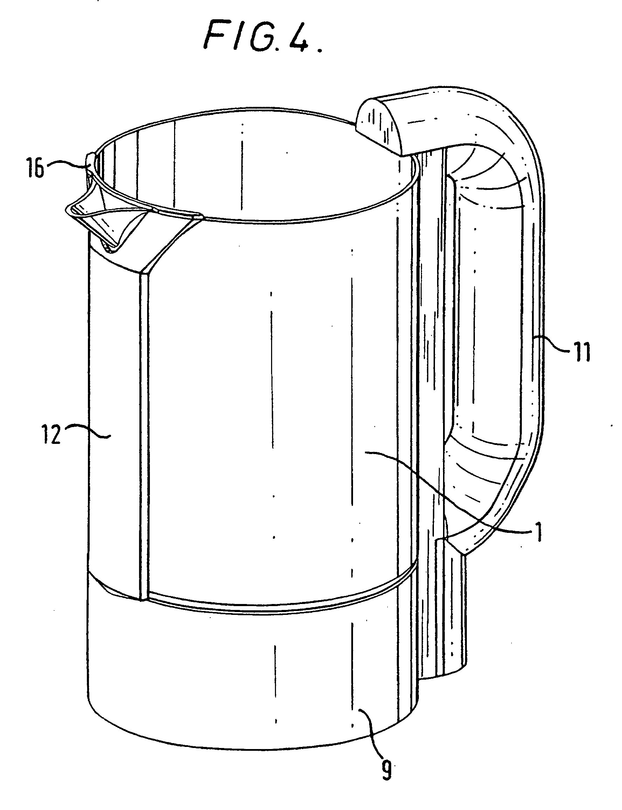

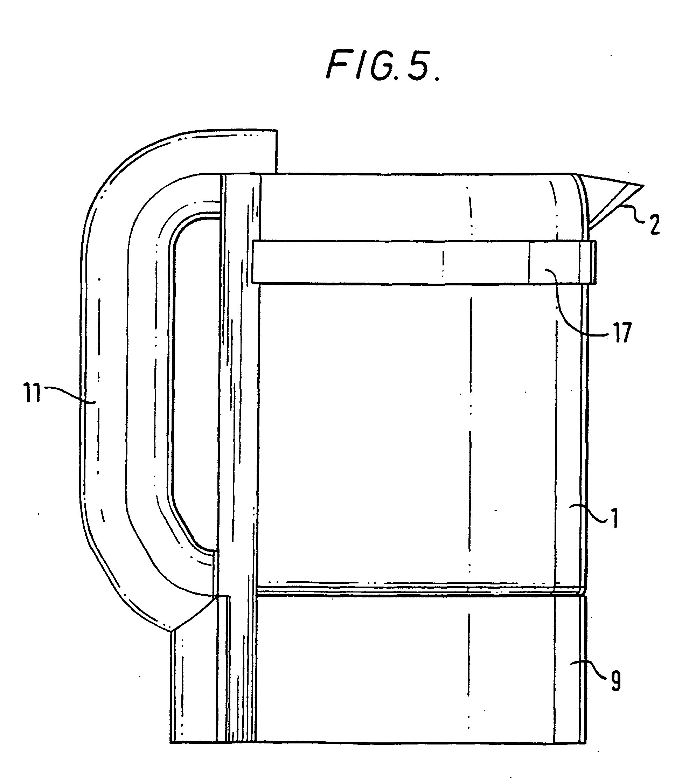

On the spout side of the vessel, opposite the handle moulding, there is provided a base-to-spout attachment moulding 12 which can be formed integrally with the base moulding 9 or may be attached thereto by any convenient means. The base-to-spout attachment moulding 12, as shown more clearly in Figure 4, ties the upper rim 3 of the vessel to the base moulding 9 by virtue of having a loop formation 16 at its upper end which fits around and over the spout 2. Alternatively, or additionally, as shown in Figure 5, a metal or plastics material band or strap 17 could be provided around the vessel body 1 so as to retain the vessel body and handle moulding together; such a band could be moulded integrally with the base-to-spout attachment moulding 12 and/or with the handle moulding 11, though this-obviously would complicate the respective mouldings. Further, an adhesive such as an adhesive silicone rubber (for example Silicoset RTV Adhesive Sealant manufactured by Ambersil Limited) could be used for fixing the glass body part 1 of the vessel into its base moulding 9.

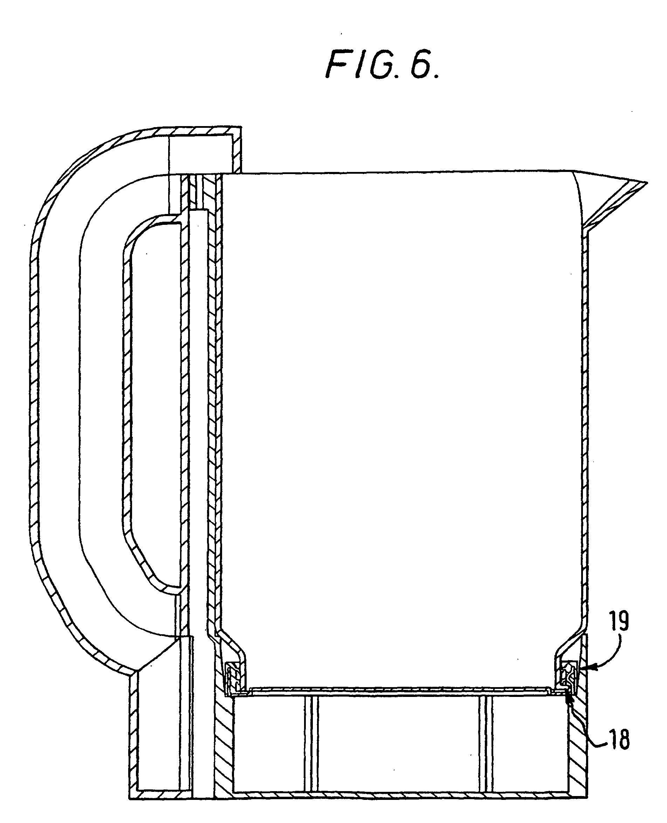

Figure 6 shows a modification of the above-described embodiment wherein the bottom rim 15 of the glass body 1 of the vessel has a protrusion 18 aligned vertically with the spout 2 and the vertically-extending flange part 7 of the heating element 8 is formed with a detent 19 adapted to hook over the protrusion 18 so as to assist in retaining the heating element to the vessel body. The protrusion 18 is designed so as not to interfere with the operation of the seal 5 and/or the seal 5 may be modified to accommodate the detent 19 without distortion of the seal which might cause leakage. Plural protrusions could be provided spaced around the bottom rim 15 of the vessel body 1, or the protrusion could be formed continuously about the rim 15.

Having thus described the present invention by reference to specific embodiments, it is to be well understood that the embodiments are in all respects exemplary and that modifications and variations thereto are possible without departure from the scope of the invention as set forth in the appended claims. For example, as previously mentioned herein, the part 8 shown in Figure 2 could be formed as a separate carrier for a planar heating element rather being an integral part of the heating element itself. Additionally, the juncture between the base moulding and the glass jug body 1 could be concealed and reinforced by means of an encircling band similar to the band 17 shown in Figure 5. Finally, while the invention is particularly concerned concerned with the assembly of planar electric heating elements to glass bodied vessels, the invention clearly is equally applicable to vessel bodies formed of moulded plastics materials or of other materials such as ceramics, porcelain or china for example.

## Claims

1. An electrically heated vessel comprising:
a vessel body (1) including a downwardly depending rim (4) defining an opening, and
a planar heating element (8) for applying heat to a liquid in said vessel body (1), the planar heating element (8) comprising an upstanding peripheral part (7);
**characterised in that**:
the element (8) extends beyond said rim (4) to form a space between an internal surface of said upstanding part (7) and an external surface (6) of the downwardly depending rim (4), said space being sealed by a resilient seal (5) which is arranged to bear upon said internal surface of the upstanding part (7) and said external surface (6) of the rim (4).

2. An electrically heated vessel according to Claim 1, wherein the heating element comprises an element holder and an element proper, the element proper is operable to apply heat to a liquid in said vessel body (1), and the upstanding part (7) is formed in said element holder.

3. An electrically heated vessel according to Claim 1 or 2, wherein the vessel body (1) is formed of glass.

4. An electrically heated vessel according to any of claims 1 to 3, wherein said upstanding part (7) comprises an upstanding flange.

5. An electrically heated vessel according to Claim 4, wherein said internal surface of said flange (7) has one or more detents (19) formed therein for positive engagement with complementary formations (18) provided on said external surface (6) of said rim (4).

6. An electrically heated vessel according to any preceding claim, including a base (9) arranged to support the heating element (8) relative to the vessel body (1).

7. An electrically heated vessel according to Claim 6, wherein the base (9) is adhesively secured to the vessel body (1).

8. An electrically heated vessel according to Claim 6 or 7, wherein the base (9) is secured to the vessel body (1), at least in part, by means of the vessel body (1) including one or more structural parts (11, 15) which connect at one end to the base (9) and at their other end engage with the top of the vessel body (1) or an upper part thereof.

9. An electrically heated vessel according to Claim 8, wherein said one or more structural parts comprises a handle (11) of the vessel.

10. An electrically heated vessel according to Claim 8 or 9, wherein the vessel body (1) is formed with a spout (2) and said one or more structural parts comprises a base-to-spout attachment.

11. An electrically heated vessel according to any preceding claim, wherein one or more bands (17) are provided securing the vessel body to a separately formed handle (11) of the vessel.

12. An electrically heated vessel according to any preceding claim, wherein said planar heating element (8) comprises a metal plate having a sheathed heating element affixed to the underside thereof.

13. An electrically heated vessel according to any of claims 1 to 11, wherein said planar heating element (8) comprises a thick film heating element.

14. An electrically heated vessel according to any preceding claim, wherein said seal (5) comprises an annular member having an external shape which complements that of said internal surface of said part, said annular member having on its internal surface a plurality of vertically spaced-apart horizontal fins (14).

## Patentansprüche

1. Elektrisch beheiztes Gefäß, umfassend:
einen Gefäßkörper (1), mit einem sich nach unten erstreckenden Rand (4), der eine Öffnung definiert, und
ein planares Heizelement (8), das dazu dient, Wärme an eine Flüssigkeit in dem Gefäßkörper (1) abzugeben, wobei das planare Heizelement (8) einen nach oben ragenden peripheren Abschnitt (7) aufweist;
**dadurch gekennzeichnet, dass**:
das Element (8) sich über den Rand (4) hinaus erstreckt, um einen Raum zwischen einer inneren Fläche des nach oben ragenden Abschnitts (7) und einer äußeren Fläche (6) des sich nach unten erstreckenden Randes (4) zu bilden, wobei der Raum durch eine elastische Dichtung (5) abgedichtet ist, die eingerichtet ist, um an der inneren Fläche des nach oben ragenden Abschnitts (7) und der äußeren Fläche (6) des Randes (4) anzuliegen.

2. Elektrisch beheiztes Gefäß nach Anspruch 1, wobei das Heizelement einen Elementhalter und ein eigentliches Element umfasst, das eigentliche Element geeignet ist, Wärme an eine Flüssigkeit in dem Gefäßkörper (1) abzugeben, und der nach oben ragende Abschnitt (7) in dem Elementhalter ausgebildet ist.

3. Elektrisch beheiztes Gefäß nach Anspruch 1 oder 2, wobei der Gefäßkörper (1) aus Glas gefertigt ist.

4. Elektrisch beheiztes Gefäß nach einem der Ansprüche 1 bis 3, wobei der nach oben ragende Abschnitt (7) einen nach oben ragenden Flansch umfasst.

5. Elektrisch beheiztes Gefäß nach Anspruch 4, wobei die innere Fläche des Flansches (7) ein oder mehrere Arretierungen (19) aufweist, die darin ausgebildet sind, um mit komplementären Ausprägungen (18), die auf der äußeren Fläche (6) des Randes (4) vorgesehen sind, in positiven Eingriff zu kommen.

6. Elektrisch beheiztes Gefäß nach einem beliebigen der vorhergehenden Ansprüche, mit einer Basis (9), die eingerichtet ist, um das Heizelement (8) bezüglich des Gefäßkörpers (1) zu tragen.

7. Elektrisch beheiztes Gefäß nach Anspruch 6, wobei die Basis (9) haftend an dem Gefäßkörper (1) befestigt ist.

8. Elektrisch beheiztes Gefäß nach Anspruch 6 oder 7, wobei die Basis (9) an dem Gefäßkörper (1) zumindest teilweise mittels des Gefäßkörpers (1) befestigt ist, der ein oder mehrere strukturelle Abschnitte (11, 15) aufweist, die an dem einen Ende mit der Basis (9) verbunden sind und an deren anderen Ende mit dem oberen Rand des Gefäßkörpers (1) oder einem oberen Abschnitt davon in Eingriff kommen.

9. Elektrisch beheiztes Gefäß nach Anspruch 8, wobei das eine oder die mehreren strukturelle Abschnitte einen Griff (11) des Gefäßes umfassen.

10. Elektrisch beheiztes Gefäß nach Anspruch 8 oder 9, wobei der Gefäßkörper (1) mit einer Tülle (2) ausgebildet ist und das eine oder die mehreren strukturellen Abschnitte eine Basis-an-Tüllen-Befestigung umfassen.

11. Elektrisch beheiztes Gefäß nach einem beliebigen der vorhergehenden Ansprüche, wobei ein oder mehrere Bänder (17) vorgesehen sind, die den Gefäßkörper an einem getrennt ausgebildeten Griff (11) des Gefäßes befestigen.

12. Elektrisch beheiztes Gefäß nach einem beliebigen der vorhergehenden Ansprüche, wobei das planare Heizelement (8) eine Metallplatte umfasst, an deren Unterseite ein ummanteltes Heizelement befestigt ist.

13. Elektrisch beheiztes Gefäß nach einem der Ansprüche 1 bis 11, wobei das planare Heizelement (8) ein Dickschichtheizelement umfasst.

14. Elektrisch beheiztes Gefäß nach einem beliebigen der vorhergehenden Ansprüche, wobei die Dichtung (5) ein ringförmiges Element mit einer äußeren Form umfasst, die komplementär zu der inneren Fläche des besagten Abschnitts ist, wobei das ringförmige Element auf seiner inneren Fläche mehrere vertikal beabstandete horizontale Rippen (14) aufweist.

## Revendications

1. Un récipient chauffé électriquement comprenant :
un corps de récipient (1) incluant un bord s'étendant vers le bas (4) définissant une ouverture, et
un élément chauffant planaire (8) pour appliquer de la chaleur à un liquide dans ledit corps de récipient (1), l'élément chauffant planaire (8) comprenant une partie verticale périphérique (7) ;
**caractérisé en ce que** :
l'élément (8) s'étend au-delà dudit bord (4) pour former un espace entre une surface interne de ladite partie verticale (7) et une surface externe (6) du bord s'étendant vers le bas (4), ledit espace étant scellé par un joint d'étanchéité élastique (5) qui est disposé pour s'appuyer sur ladite surface interne de la partie verticale (7) et ladite surface externe (6) du bord (4).

2. Un récipient chauffé électriquement selon la revendication 1, dans lequel l'élément chauffant comprend un élément support et un élément propre, l'élément propre est utilisable pour appliquer de la chaleur au liquide dans ledit corps de récipient (1), et la partie verticale (7) est formée dans ledit élément support.

3. Un récipient chauffé électriquement selon la revendication 1 ou 2, dans lequel le corps de récipient (1) est formé en verre.

4. Un récipient chauffé électriquement selon l'une quelconque des revendications 1 à 3, dans lequel ladite partie verticale (7) comprend une bride verticale.

5. Un récipient chauffé électriquement selon la revendication 4, dans lequel ladite surface interne de ladite bride (7) a un ou plusieurs cliquets (19) formés dedans pour un engagement positif avec des formations complémentaires (18) prévues sur ladite surface externe (6) dudit bord (4).

6. Un récipient chauffé électriquement selon l'une quelconque des revendications précédentes, incluant une base (9) disposée pour supporter l'élément chauffant (8) par rapport au corps de récipient (1).

7. Un récipient chauffé électriquement selon la revendication 6, dans lequel la base (9) est fixée de façon adhésive au corps de récipient (1).

8. Un récipient chauffé électriquement selon la revendication 6 ou 7, dans lequel la base (9) est fixée au corps de récipient (1), au moins en partie, au moyen du corps de récipient (1) incluant une ou plusieurs parties structurelles (11, 15) qui, à une extrémité, s'attachent à la base (9), et à leur autre extrémité, viennent en prise avec le sommet du corps de récipient (1) ou avec une partie supérieure de celui-ci.

9. Un récipient chauffé électriquement selon la revendication 8, dans lequel lesdites une ou plusieurs parties structurelles comprennent une poignée (11) du récipient.

10. Un récipient chauffé électriquement selon la revendication 8 ou 9, dans lequel le corps de récipient (1) est formé avec un bec verseur (2) et lesdites une ou plusieurs parties structurelles comprennent un raccord base/bec verseur.

11. Un récipient chauffé électriquement selon l'une quelconque des revendications précédentes, dans lequel une ou plusieurs bandes (17) sont prévues pour fixer le corps de récipient à une poignée formée séparément (11) du récipient.

12. Un récipient chauffé électriquement selon l'une quelconque des revendications précédentes, dans lequel ledit élément chauffant planaire (8) comprend une plaque métallique ayant un élément chauffant gainé appliqué sur le dessous de celle-ci.

13. Un récipient chauffé électriquement selon l'une quelconque des revendications 1 à 11, dans lequel ledit élément chauffant planaire (8) comprend un élément chauffant à film épais.

14. Un récipient chauffé électriquement selon l'une quelconque des revendications précédentes, dans lequel ledit joint (5) comprend un organe annulaire ayant une forme externe qui est complémentaire à celle de ladite surface interne de ladite partie, ledit organe annulaire ayant sur sa surface interne une pluralité d'ailettes horizontales espacées verticalement (14).
